# EUROPÄISCHE PATENTSCHRIFT

(11) **EP 1 967 470 B1**
(45) Veröffentlichungstag und Bekanntmachung des Hinweises auf die Patenterteilung: **20.04.2011**
(21) Anmeldenummer: 08002607.3
(22) Anmeldetag: 13.02.2008
(51) Int. Cl.: B65G 27/10, B65G 47/28, B65G 15/42

(54) **Fördervorrichtung für die Zuführung von Spargelstangen zu einer Spargelsortiervorrichtung**
Conveyor device for the delivery of asparagus sticks to an asparagus sorting device
Dispositif d'alimentation pour l'alimentation de tiges d'asperges dans un dispositif de tri d'asperges

(30) Priorität: 23.02.2007 DE 102007009434
(43) Veröffentlichungstag der Anmeldung: 10.09.2008
(73) Patentinhaber: Neubauer, Hermann, 59514 Welver (DE); Neubauer, Christoph, 59514 Welver (DE)
(72) Erfinder: Neubauer, Christoph, 59514 Welver (DE)
(74) Vertreter: Basfeld, Rainer

(56) Entgegenhaltungen:
- EP-A- 1 621 262
- DE-A1- 4 417 257
- DE-A1- 10 112 213
- DE-U1- 20 313 907
- DE-U1- 29 902 392
- JP-A- 63 306 122
- US-A1- 2002 104 741

## Beschreibung

Die vorliegende Erfindung betrifft eine Fördervorrichtung für die Zuführung von Spargelstangen zu einer Spargelsortiervorrichtung gemäß dem Oberbegriff des Anspruchs 1, eine Spargelsortiermaschine gemäß dem Oberbegriff des Anspruchs 11 sowie ein Verfahren zum Betrieb einer Spargelsortiermaschine und einer Fördervorrichtung gemäß dem Oberbegriff des Anspruchs 12.

Eine Fördervorrichtung, eine Sortiermaschine und ein Verfahren der vorgenannten Art sind aus dem deutschen Gebrauchsmuster DE 203 13 907 U1 bekannt. Eine darin beschriebene Fördervorrichtung umfasst eine Mehrzahl von nebeneinander angeordneten ersten Förderbändern, die Mulden für das zu sortierende Stückgut, wie beispielsweise Äpfel, aufweisen. Auf diese Förderbänder wird beispielsweise von einer schiefen Ebene das Stückgut aufgebracht. Auf der Mehrzahl von nebeneinander angeordneten Förderbändern wird das Stückgut vereinzelt, wobei zur Verbesserung der Vereinzelung die Förderbänder einer Vibration ausgesetzt werden.

An die Mehrzahl von Förderbändern schließen sich eine Übergabestation und eine Mehrzahl von zweiten Förderbändern an, die Aufnahmen für das vereinzelte Stückgut aufweisen. Die ersten und die zweiten Förderbänder sind synchronisiert, so dass aus jeder der Mulden der ersten Förderbänder ein Apfel oder dergleichen in genau eine Aufnahme eines der zweiten Förderbänder übergeben wird. Die zweiten Förderbänder können das Stückgut einer Sortiervorrichtung zuführen.

Eine Spargelsortiervorrichtung ist aus dem deutschen Gebrauchsmuster DE 299 02 392 U1 bekannt. Problematisch ist die Bereitstellung von Fördervorrichtungen, die die zu sortierenden Spargelstangen so der Sortiermaschine zuführen, dass in dieser keine Vereinzelung der Spargelstangen mehr vorgenommen werden soll. Im Stand der Technik werden dazu Förderbänder genutzt, auf denen manuell sehr ineffektiv und unter hohem Personaleinsatz Spargelstangen vereinzelt werden. In der Regel müssen bei Fördervorrichtungen gemäß dem Stand der Technik mehrere Personen auf ein Ende der Fördervorrichtung Spargel auflegen und den aufgelegten Spargel vereinzeln. Weiterhin gibt es zwar im Stand der Technik Förderbänder, bei denen einzelne Spargelstangen teilweise in Querrichtung verschoben werden können. Diese lassen jedoch sehr kurze Spargelstangen unberücksichtigt. Dies führt dazu, dass die kurzen Spargelstangen im Stand der Technik häufig fußseitig nicht abgeschnitten werden.

Das der vorliegenden Erfindung zugrunde liegende Problem ist die Schaffung einer Fördervorrichtung und einer Spargelsortiermaschine der eingangs genannten Art, die effektiver aufgebaut sind. Weiterhin soll ein Verfahren zum Betrieb derartiger Vorrichtungen angegeben werden.

Dies wird erfindungsgemäß hinsichtlich der Fördervorrichtung durch eine Fördervorrichtung der eingangs genannten Art mit den kennzeichnenden Merkmalen des Anspruchs 1, hinsichtlich der Spargelsortiermaschine durch eine Spargelsortiermaschine der eingangs genannten Art mit den kennzeichnenden Merkmalen des Anspruchs 11 sowie hinsichtlich des Verfahrens durch ein Verfahren der eingangs genannten Art mit den kennzeichnenden Merkmalen des Anspruchs 12 erreicht. Die Unteransprüche betreffen bevorzugte Ausgestaltungen der Erfindung.

Gemäß Anspruch 1 ist vorgesehen, dass die überlagerte Bewegung eine Schwingung in Zuführrichtung und der zu der Zuführrichtung entgegengesetzten Richtung ist. Durch diese überlagerte Bewegung kann eine automatische Vereinzelung auf dem mindestens einen Förderband erfolgen. Damit kann eine manuelle Vereinzelung im Bereich der Spargelsortiermaschine weitgehend entfallen. Das Auflegen großer Mengen von Spargelstangen kann dabei von einer einzelnen Person durchgeführt werden, wobei dieser sogar noch genug Zeit bleibt, um nebenbei Barcodes zu scannen, die auf den Kisten angeordnet sind, in denen die abgeernteten Spargelstangen angeliefert werden.

Es besteht die Möglichkeit, dass das Förderband in regelmäßigen Abständen Vorsprünge aufweist, die zwischen sich Aufnahmemulden für die Aufnahme einzelner Spargelstangen bilden. Die Vorsprünge können beispielsweise einen im wesentlichen trapezförmigen Querschnitt aufweisen. Weiterhin kann vorgesehen sein, dass die Vorsprünge derart gestaltet sind, dass von mehr als einer zwischen zwei benachbarten Vorsprüngen angeordneten Spargelstangen eine über einen der Vorsprünge durch die überlagerte Bewegung bewegt werden kann, um die Spargelstangen zu vereinzeln. Dies ist ein einfacher aber effektiver Mechanismus zur Vereinzelung.

Es kann vorgesehen sein, dass die Fördervorrichtung Mittel zur Förderung der Spargelstangen in Querrichtung des mindestens einen Förderbandes parallel zur Ebene des Förderbandes umfasst. Dabei können die Mittel zur Förderung der Spargelstangen in Querrichtung eine Schwingfördereinheit sein. Durch eine derartige Schwingfördereinheit werden alle Spargelstangen unabhängig von ihrer Größe in Querrichtung des mindestens einen Förderbandes parallel zur Ebene des Förderbandes bewegt. Diese Bewegung kann beispielsweise für das Abschneiden der Spargelstangen in nachfolgenden Schneideeinheiten auf eine gewünschte Länge vorteilhaft sein. Insbesondere können durch die Querförderung auch kleine Spargelstangen fußseitig angelegt werden, so dass diese in nachfolgenden Schneideeinheiten ebenfalls abgeschnitten werden können. Dies kann bei Fördervorrichtungen gemäß dem Stand der Technik nicht gewährleistet werden. Insbesondere wirkt dabei die in Zuführrichtung überlagerte Bewegung auch unterstützend für die Querförderung durch die Schwingfördereinheit. Dies deshalb, weil durch die Hin- und Herbewegung in Zuführrichtung während der Querförderung verhindert wird, dass die einzelnen Spargelstangen zwischen die einzelnen Förderbänder geraten und dadurch die Querförderung blockiert wird.

Gemäß Anspruch 11 ist vorgesehen, dass die Fördervorrichtung eine erfindungsgemäße Fördervorrichtung ist . Auf diese Weise kann die Spargelsortiermaschine effektiv genutzt werden, weil im Idealfall jede Aufnahmemulde auf ihrem Förderband mit genau einer Spargelstange gefüllt ist. Damit entfällt erstens eine manuelle Vereinzelung im Bereich der Spargelsortiermaschine. Zweitens erhöht sich der Durchsatz durch die Spargelsortiermaschine weil keine der Aufnahmemulden leer ist.

Anspruch 12 sieht vor, dass die überlagerte Bewegung des Förderbandes der Fördervorrichtung eine Schwingung in Zuführrichtung und der zu der Zuführrichtung entgegengesetzten Richtung ist. Insbesondere kann dabei die Vorschubgeschwindigkeit der Förderbänder der Fördervorrichtung in Abhängigkeit von der Fördergeschwindigkeit in der Spargelsortiervorrichtung geregelt werden, wobei bei der Regelung insbesondere die überlagerte Bewegung berücksichtigt werden kann. Auf diese Weise wird sehr effektiv erreicht, dass trotz der Überlagerungsbewegung im wesentlichen jede Aufnahmemulde des Förderbands der Spargelsortiervorrichtung mit genau einer Spargelstange gefüllt wird.

Weitere Merkmale und Vorteile der vorliegende Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht einer erfindungsgemäßen Fördervorrichtung;
- Fig. 2: eine Detailansicht gemäß dem Pfeil II in Fig. 1;
- Fig. 3: eine Draufsicht auf die Fördervorrichtung gemäß Fig. 1.

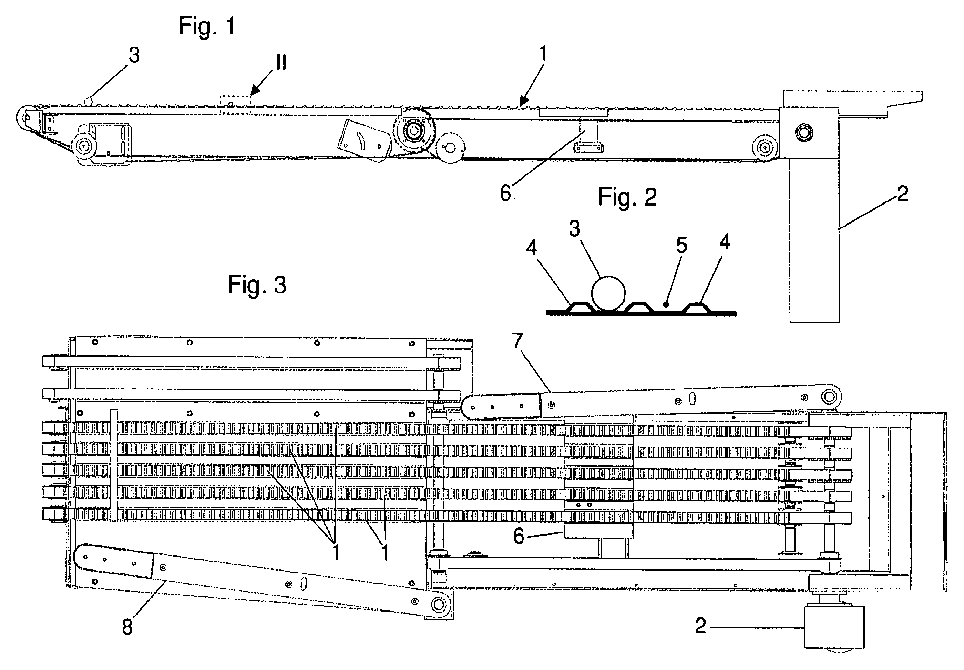

Die aus Fig. 1 bis Fig. 3 ersichtliche Fördervorrichtung umfasst fünf zueinander parallele und zueinander beabstandete Förderbänder 1, die sich in Fig. 1 im Gegenuhrzeigersinn beziehungsweise in Fig. 3 von rechts nach links bewegen können. Die Förderbänder 1 werden von einem schematisch dargestellten Servomotor 2 über ein Kegelradgetriebe angetrieben. Dabei laufen sämtliche Förderbänder 1 synchron zueinander. Am linken Ende in Fig. 1 und Fig. 3 übergeben die Förderbänder 1 von ihnen transportierte Spargelstangen 3 an eine nicht abgebildete Spargelsortiervorrichtung.

Auf einem jeden der Förderbänder 1 sind Vorsprünge 4 in regelmäßigen Abständen angeordnet, die derart zueinander beabstandet sind, dass zwischen ihnen Aufnahmemulden 5 für Spargelstangen 3 entstehen (siehe dazu auch Fig. 2). Die Vorsprünge 4 erstrecken sich dabei in Querrichtung der Förderbänder 1 und weisen einen im wesentlichen trapezförmigen Querschnitt auf.

Die Fördervorrichtung umfasst weiterhin nicht abgebildete Steuermittel, die den Servomotor 2 ansteuern können. Dabei steuern die Steuermittel den Servomotor 2 derart an, dass der kontinuierlichen Vorwärtsbewegung in Förderrichtung beziehungsweise Zuführrichtung (d.h. nach links in Fig. 1 und Fig. 3) eine Hin- und Herbewegung beziehungsweise Schwingung in Zuführrichtung und in der dazu entgegengesetzten Richtung überlagert wird. Diese überlagerte Schwingung kann eine derartige Frequenz und eine derartige Amplitude aufweisen, dass bei Schwingung in Zuführrichtung die Geschwindigkeit der Förderbänder 1 temporär vergrößert, beispielsweise sogar mehr als verdoppelt wird, wohingegen bei Schwingung entgegen der Zuführrichtung die Bewegung der Förderbänder 1 in Zuführrichtung temporär verkleinert wird, wobei beispielsweise sogar die Bewegung der Förderbänder 1 temporär in eine Bewegung entgegen der Zuführrichtung geändert werden kann.

Durch die überlagerte Schwingung wird auf in den Aufnahmemulden 5 befindliche Spargelstangen 3 ein Impuls in Zuführrichtung beziehungsweise in entgegengesetzter Richtung übertragen, so dass für den Fall, dass mehr als eine Spargelstange 3 in einer Aufnahmemulde 5 angeordnet ist, eine der Spargelstangen über einen die Aufnahmemulde 5 begrenzenden Vorsprung 4 in die benachbarte Aufnahmemulde 5 gelangen kann. Auf diese Weise trägt die überlagerte Schwingung zur Vereinzelung der Spargelstangen 3 bei. Es ist also beispielsweise möglich, auf das in Fig. 1 und Fig. 3 linke Ende der Förderbänder 1 eine einen großen Haufen bildende Menge von Spargelstangen 3 aufzulegen, die dann aufgrund der überlagerten Schwingung während der Förderung nach links vereinzelt werden, so dass im Idealfall am linken Ende der Förderbänder 1 in jeder der Aufnahmemulden 5 genau eine Spargelstange 3 liegt. Insbesondere werden dabei auch die oberen Spargelstangen des Haufens durch eine rollierende Bewegung nach links und rechts verteilt. Das Auflegen großer Mengen von Spargelstangen kann dabei von einer einzelnen Person durchgeführt werden, wobei dieser sogar noch genug Zeit bleibt, um nebenbei Barcodes zu scannen, die auf den Kisten angeordnet sind, in denen die abgeernteten Spargelstangen angeliefert werden.

Es besteht die Möglichkeit, Schaltmittel vorzusehen, mit denen der Benutzer Einfluss auf die zu überlagernde Schwingung nehmen kann. Insbesondere können die Amplitude und die Frequenz der Schwingung durch die Schaltmittel vorgegeben werden.

Die Steuermittel sind weiterhin derart gestaltet, dass die Bewegung der Förderbänder 1 mit der Bewegung eines Förderbandes oder mehrerer Förderbändern der nicht abgebildeten Spargelsortiervorrichtung synchronisiert ist. Die Synchronisation ermöglicht es, den Inhalt einer Aufnahmemulde 5 der Förderbänder 1 an genau eine Aufnahmemulde des Förderbandes oder der Förderbänder der Spargelsortiervorrichtung zu übergeben. Insbesondere soll eine Spargelstange 3 aus einer Aufnahmemulde 5 genau in der Mitte einer Aufnahmemulde des Förderbandes oder der Förderbänder der Spargelsortiervorrichtung abgelegt werden. Die Synchronisation kann beispielsweise aufgrund von Impulsen erfolgen, die von der Spargelsortiervorrichtung an die Steuermittel gesandt werden. Auf Basis dieser Impulse können dann die Steuermittel die Vorschubgeschwindigkeit der Förderbänder 1 festlegen. Weiterhin wird dabei von den Steuermitteln die überlagerte Schwingung berücksichtigt.

Es besteht weiterhin die Möglichkeit, dass Erfassungsmittel vorgesehen sind, die feststellen können, ob mehr als eine Spargelstange 3 in einer Aufnahmemulde 5 liegt. Die Erfassungsmittel können beispielsweise einen Zeilenlaser umfassen, der die einzelnen Mulden zeilenweise abtastet, wobei das reflektierte Licht des Zeilenlasers von einem geeigneten Sensor oder einer Kamera erfasst und ausgewertet werden kann. Wenn die Erfassungsmittel mehr als eine Spargelstange 3 in einer Aufnahmemulde 5 erkennen, kann die Geschwindigkeit der Förderbänder 1 angepasst, insbesondere verringert werden, so dass trotzdem jeweils nur eine Spargelstange 3 an eine Aufnahmemulde des Förderbandes oder der Förderbänder der Spargelsortiervorrichtung übergeben wird.

Die Fördervorrichtung umfasst weiterhin eine als Mittel zur Förderung in Querrichtung dienende Schwingfördereinheit 6, die auf den Förderbändern 1 abgelegte Spargelstangen 3 in Querrichtung der Förderbänder 1 (d.h. nach oben in Fig. 3) bewegen kann. Die Schwingfördereinheit 6 kann beispielsweise eine Schwingung in Querrichtung mit einer Frequenz von 50 Hz auf Spargelstangen 3, die auf den Förderbändern 1 liegen, im Bereich der Schwingfördereinheit 6 übertragen. Die Schwingfördereinheit 6 ist zu diesem Zweck unter den Förderbändern 1 angeordnet, wobei mindestens ein schwingendes Teil der Schwingfördereinheit 6 zwischen den einzelnen Förderbändern 1 nach oben ragen und die entsprechende Spargelstange 3 von unten berühren kann. Durch diese Berührung kann die Schwingung auf die Spargelstange 3 übertragen werden.

Es besteht die Möglichkeit, dass anstelle der Schwingfördereinheit 6 andere Mittel zur Förderung in Querrichtung vorgesehen sind. Es können dies beispielsweise ein Rollenförderer oder ein Bürstenförderer sein, die unter und teilweise zwischen den Förderbändern 1 angeordnet sind. Dabei können zwischen den Förderbändern 1 nach oben ragende Bürsten oder Rollen einen Vorschub in Querrichtung auf die Spargelstangen 3 übertragen.

Die Fördervorrichtung umfasst weiterhin zwei seitliche Anlagebänder 7, 8, die sich ebenfalls in Zuführrichtung bewegen und somit auch die Enden und/oder Spitzen der Spargelstangen 3 in Zuführrichtung fördern können. Das erste Anlageband 7 ist dabei im Bereich der Schwingfördereinheit 6 an der Seite der Fördervorrichtung angeordnet, zu der die Schwingfördereinheit 6 auf den Förderbändern 1 befindliche Spargelstangen 3 bewegt.

Es besteht die Möglichkeit, anstelle des ersten Anlagebandes 7 eine, beispielsweise winkelförmige, Anlagefläche vorzusehen, die mit der Schwingfördereinheit 6 mitschwingt. Auch eine derartig mitschwingende Anlagefläche kann die Förderung der Spargelstangen 3 in der Förderrichtung nach links in Fig. 3 unterstützen.

Das zweite Anlageband 8 ist in Zuführrichtung hinter dem ersten Anlageband 7 auf der anderen Seite der Fördervorrichtung angeordnet. Beide Anlagebänder 7, 8 schließen mit der Zuführrichtung einen kleinen Winkel ein, so dass an den Anlagebändern 7, 8 anliegende Spargelstangen 3 bei Bewegung in Zuführrichtung so weit zur Mitte der Fördervorrichtung verschoben werden, dass die gewünschte Abschneidelänge gewährleistet wird.

Durch die Schwingfördereinheit 6 in Verbindung mit dem ersten Anlageband 7 werden auch kurze Spargelstangen 3 mit ihren Enden am in Fig. 3 oberen Rand des in Fig. 3 obersten Förderbandes 1 ausgerichtet. Durch das zweite Anlageband 8 werden alle Spargelstangen 3, die länger als beispielsweise 22 cm sind, so weit nach oben in Fig. 3 beziehungsweise nach rechts bezüglich der Zuführrichtung geschoben, dass von einem beispielsweise im Bereich der nicht abgebildeten Spargelsortiervorrichtung angeordneten Messer die Enden der Spargelstangen 3 auf eine Länge von 22 cm automatisch abgeschnitten werden können.

## Patentansprüche

1. Fördervorrichtung für die Zuführung von Spargelstangen (3) zu einer Spargelsortiervorrichtung, umfassend
- mindestens ein Förderband (1), das sich in Zuführrichtung bewegen kann, wobei auf das Förderband (1) Spargelstangen (3) aufbringbar sind,
- eine Antriebseinrichtung für die Bewegung des Förderbandes (1),
- Steuermittel zur Ansteuerung der Antriebseinrichtung, wobei die Steuermittel und/oder die Antriebseinrichtung derart gestaltet sind, dass der Bewegung des Förderbandes (1) in Zuführrichtung eine weitere Bewegung des Förderbandes (1) überlagert werden kann,
**dadurch gekennzeichnet, dass** die überlagerte Bewegung eine Schwingung in Zuführrichtung und der zu der Zuführrichtung entgegengesetzten Richtung ist.

2. Fördervorrichtung nach Anspruch 1, **dadurch gekennzeichnet, dass** das Förderband (1) in regelmäßigen Abständen Vorsprünge (4) aufweist, die zwischen sich Aufnahmemulden (5) für die Aufnahme einzelner Spargelstangen (3) bilden.

3. Fördervorrichtung nach Anspruch 2, **dadurch gekennzeichnet, dass** die Vorsprünge (4) einen im wesentlichen trapezförmigen Querschnitt aufweisen.

4. Fördervorrichtung nach einem der Ansprüche 2 oder 3, **dadurch gekennzeichnet, dass** die Vorsprünge (4) derart gestaltet sind, dass von mehr als einer zwischen zwei benachbarten Vorsprüngen (4) angeordneten Spargelstangen (3) eine über einen der Vorsprünge (4) durch die überlagerte Bewegung bewegt werden kann, um die Spargelstangen (3) zu vereinzeln.

5. Fördervorrichtung nach einem der Ansprüche 1 bis 4, **dadurch gekennzeichnet, dass** die Fördervorrichtung eine Mehrzahl von zueinander parallelen und zueinander beabstandeten Förderbändern (1) umfasst.

6. Fördervorrichtung nach einem der Ansprüche 1 bis 5, **dadurch gekennzeichnet, dass** die Antriebseinrichtung einen Servomotor (2) umfasst.

7. Fördervorrichtung nach einem der Ansprüche 1 bis 6, **dadurch gekennzeichnet, dass** die Fördervorrichtung Mittel zur Förderung der Spargelstangen (3) in Querrichtung des mindestens einen Förderbandes (1) parallel zur Ebene des Förderbandes (1) umfasst.

8. Fördervorrichtung nach Anspruch 7, **dadurch gekennzeichnet, dass** die Mittel zur Förderung der Spargelstangen (3) in Querrichtung eine Schwingfördereinheit (6) ist.

9. Fördervorrichtung nach Anspruch 8, **dadurch gekennzeichnet, dass** die Schwingfördereinheit (6) eine Schwingung einer auf dem mindestens einen Förderband (1) aufliegenden Spargelstange (3) in Querrichtung parallel zur Ebene des Förderbandes (1) bewirken kann.

10. Fördervorrichtung nach einem der Ansprüche 1 bis 9, **dadurch gekennzeichnet, dass** die Fördervorrichtung mindestens ein seitliches Anlageband (7, 8) umfasst, an dem die Spargelstangen (3) mit ihren Enden und/oder Spitzen anliegen können.

11. Spargelsortiermaschine, umfassend
- eine Fördervorrichtung für die Zuführung von Spargelstangen (3), das ein Förderband (1) mit Aufnahmemulden (5) für die Aufnahme einzelner Spargelstangen (3) umfasst,
- eine Spargelsortiervorrichtung,
- die eine Sortiereinheit, die die Spargelstangen sortieren kann, und
- mindestens ein mit Aufnahmemulden für einzelne Spargelstangen versehenes Förderband aufweist, das die von der Fördervorrichtung zugeführten Spargelstangen der Sortiereinheit zuführen kann, wobei das mindestens eine Förderband (1) der Fördervorrichtung und das mindestens eine Förderband der Spargelsortiervorrichtung derart miteinander synchronisiert sind, dass in jede der Aufnahmemulden der Spargelsortiervorrichtung genau eine Spargelstange (3) aus genau einer der Aufnahmemulden (5) des mindestens einen Förderbands (1) der Fördervorrichtung abgelegt werden kann
**dadurch gekennzeichnet, dass** die Fördervorrichtung eine Fördervorrichtung nach einem der Ansprüche 1 bis 10 ist.

12. Verfahren zum Betrieb einer Spargelsortiermaschine nach Anspruch 11, wobei das Verfahren folgende Verfahrensschritte aufweist:
- Der Bewegung des Förderbandes (1) der Fördervorrichtung in Zuführrichtung wird eine weitere Bewegung des Förderbandes (1) der Fördervorrichtung überlagert;
- das mindestens eine Förderband (1) der Fördervorrichtung und das mindestens eine Förderband der Spargelsortiervorrichtung werden derart miteinander synchronisiert, dass in jede der Aufnahmemulden der Spargelsortiervorrichtung genau eine Spargelstange (3) aus genau einer der Aufnahmemulden (5) des mindestens einen Förderbands (1) der Fördervorrichtung abgelegt werden kann;
**dadurch gekennzeichnet, dass**, die überlagerte Bewegung des Förderbandes (1) der Fördervorrichtung eine Schwingung in Zuführrichtung und der zu der Zuführrichtung entgegengesetzten Richtung ist.

13. Verfahren nach Anspruch 12, **dadurch gekennzeichnet, dass** die Vorschubgeschwindigkeit der Förderbänder (1) der Fördervorrichtung in Abhängigkeit von der Fördergeschwindigkeit in der Spargelsortiervorrichtung geregelt wird, wobei bei der Regelung insbesondere die überlagerte Bewegung berücksichtigt wird.

## Claims

1. Conveying apparatus for supplying asparagus stalks (3) to an asparagus sorting apparatus, comprising
- at least one conveying belt (1) which can move in the supplying direction, wherein asparagus stalks (3) can be introduced onto the conveying belt (1),
- a drive device for moving the conveying belt (1),
- control means for actuating the drive device, wherein the control means and/or the drive device are designed such that a further movement of the conveying belt (1) can be superimposed on the movement of the conveying belt (1) in the supplying direction,
**characterized in that** the superimposed movement is an oscillation in the supplying direction and in the opposite direction to the supplying direction.

2. Conveying apparatus according to Claim 1, **characterized in that** the conveying belt (1) has regularly spaced protrusions (4) which form accommodating recesses (5) between one another for accommodating individual asparagus stalks (3).

3. Conveying apparatus according to Claim 2, **characterized in that** the protrusions (4) have a substantially trapezoidal cross section.

4. Conveying apparatus according to either of Claims 2 and 3, **characterized in that** the protrusions (4) are designed such that one of more than one asparagus stalks (3) arranged between two adjacent protrusions (4) can be moved over one of the protrusions (4) by the superimposed movement in order to separate the asparagus stalks (3).

5. Conveying apparatus according to one of Claims 1 to 4, **characterized in that** the conveying apparatus comprises a plurality of parallel and spaced-apart conveying belts (1).

6. Conveying apparatus according to one of Claims 1 to 5, **characterized in that** the drive device comprises a servomotor (2).

7. Conveying apparatus according to one of Claims 1 to 6, **characterized in that** the conveying apparatus comprises means for conveying the asparagus stalks (3) in the transverse direction of the at least one conveying belt (1) parallel to the plane of the conveying belt (1).

8. Conveying apparatus according to Claim 7, **characterized in that** the means for conveying the asparagus stalks (3) in the transverse direction is a oscillating conveying unit (6).

9. Conveying apparatus according to Claim 8, **characterized in that** the oscillating conveying unit (6) can cause an asparagus stalk (3) resting on the at least one conveying belt (1) to oscillate in the transverse direction parallel to the plane of the conveying belt (1).

10. Conveying apparatus according to one of Claims 1 to 9, **characterized in that** the conveying apparatus comprises at least one lateral abutment belt (7, 8) against which the ends and/or tips of the asparagus stalks (3) can butt.

11. Asparagus sorting machine, comprising
- a conveying apparatus for supplying asparagus stalks (3) and comprising a conveying belt (1) having accommodating recesses (5) for accommodating individual asparagus stalks (3),
- an asparagus sorting apparatus,
- which has a sorting unit which can sort the asparagus stalks and
- at least one conveying belt, which is provided with accommodating recesses for individual asparagus stalks and can supply the asparagus stalks supplied by the conveying apparatus to the sorting unit, wherein the at least one conveying belt (1) of the conveying apparatus and the at least one conveying belt of the asparagus sorting apparatus are synchronized with one another such that precisely one asparagus stalk (3) from precisely one of the accommodating recesses (5) of the at least one conveying belt (1) of the conveying apparatus can be deposited in each of the accommodating recesses of the asparagus sorting apparatus,
**characterized in that** the conveying apparatus is a conveying apparatus according to one of Claims 1 to 10.

12. Method for operating an asparagus sorting machine according to Claim 11, wherein the method has the following method steps:
- a further movement of the conveying belt (1) of the conveying apparatus is superimposed on the movement of the conveying belt (1) of the conveying apparatus in the supplying direction;
- the at least one conveying belt (1) of the conveying apparatus and the at least one conveying belt of the asparagus sorting apparatus are synchronized with one another such that precisely one asparagus stalk (3) from precisely one of the accommodating recesses (5) of the at least one conveying belt (1) of the conveying apparatus can be deposited in each of the accommodating recesses of the asparagus sorting apparatus;
**characterized in that** the superimposed movement of the conveying belt (1) of the conveying apparatus is an oscillation in the supplying direction and in the opposite direction to the supplying direction.

13. Method according to Claim 12, **characterized in that** the advancement speed of the conveying belts (1) of the conveying apparatus is regulated as a function of the conveying speed in the asparagus sorting apparatus, wherein the superimposed movement in particular is taken into consideration during the regulation.

## Revendications

1. Dispositif de transport pour l'alimentation de tiges d'asperges (3) à un dispositif de tri d'asperges, comprenant :
- au moins une bande transporteuse (1), qui peut se déplacer dans la direction d'alimentation, des tiges d'asperges (3) pouvant être disposées sur la bande transporteuse (1),
- un dispositif d'entraînement pour le déplacement de la bande transporteuse (1),
- des moyens de commande pour la commande du dispositif d'entraînement, les moyens de commande et/ou le dispositif d'entraînement étant configurés de telle sorte qu'au mouvement de la bande transporteuse (1) dans la direction d'alimentation puisse être superposé un mouvement supplémentaire de la bande transporteuse (1),
**caractérisé en ce que** le mouvement superposé est une oscillation dans la direction d'alimentation et dans la direction opposée à la direction d'alimentation.

2. Dispositif de transport selon la revendication 1, **caractérisé en ce que** la bande transporteuse (1) présente des saillies (4) à intervalles réguliers, lesquelles forment entre elles des creux de réception (5) pour recevoir des tiges d'asperges individuelles (3).

3. Dispositif de transport selon la revendication 2, **caractérisé en ce que** les saillies (4) présentent une section transversale essentiellement trapézoïdale.

4. Dispositif de transport selon l'une quelconque des revendications 2 ou 3, **caractérisé en ce que** les saillies (4) sont configurées de telle sorte que parmi plus d'une tiges d'asperge (3) disposées entre deux saillies adjacentes (4), l'une puisse être déplacée par-dessus l'une des saillies (4) par le mouvement superposé, afin de séparer les tiges d'asperges (3).

5. Dispositif de transport selon l'une quelconque des revendications 1 à 4, **caractérisé en ce que** le dispositif de transport comprend une pluralité de bandes transporteuses (1) parallèles les unes aux autres et espacées les unes des autres.

6. Dispositif de transport selon l'une quelconque des revendications 1 à 5, **caractérisé en ce que** le dispositif d'entraînement comprend un servomoteur (2).

7. Dispositif de transport selon l'une quelconque des revendications 1 à 6, **caractérisé en ce que** le dispositif de transport comprend des moyens pour transporter les tiges d'asperges (3) dans la direction transversale de l'au moins une bande transporteuse (1) parallèlement au plan de la bande transporteuse (1).

8. Dispositif de transport selon la revendication 7, **caractérisé en ce que** le moyen pour transporter les tiges d'asperges (3) dans la direction transversale est une unité de transport oscillante (6) .

9. Dispositif de transport selon la revendication 8, **caractérisé en ce que** l'unité de transport oscillante (6) peut provoquer l'oscillation d'une tige d'asperge (3) posée sur l'au moins une bande transporteuse (1) dans la direction transversale parallèlement au plan de la bande transporteuse (1) .

10. Dispositif de transport selon l'une quelconque des revendications 1 à 9, **caractérisé en ce que** le dispositif de transport comprend au moins une bande d'appui latérale (7, 8), contre laquelle les tiges d'asperges (3) peuvent s'appuyer avec leurs extrémités et/ou leurs pointes.

11. Machine pour trier des asperges, comprenant :
- un dispositif de transport pour l'alimentation de tiges d'asperges (3), qui comprend une bande transporteuse (1) avec des creux de réception (5) pour recevoir des tiges d'asperges individuelles (3),
- un dispositif de tri d'asperges,
- qui présente une unité de tri qui peut trier les tiges d'asperges, et
- au moins une bande transporteuse pourvue de creux de réception pour des tiges d'asperges individuelles, qui peut acheminer à l'unité de tri les tiges d'asperges acheminées par le dispositif de transport, l'au moins une bande transporteuse (1) du dispositif de transport et l'au moins une bande transporteuse du dispositif de tri d'asperges étant synchronisées l'une avec l'autre de telle sorte que dans chaque creux de réception du dispositif de tri d'asperges puisse être déposée exactement une tige d'asperge (3) provenant exactement d'un des creux de réception (5) de l'au moins une bande transporteuse (1) du dispositif de transport,
**caractérisée en ce que** le dispositif de transport est un dispositif de transport selon l'une quelconque des revendications 1 à 10.

12. Procédé pour faire fonctionner une machine pour trier des asperges selon la revendication 11, dans lequel le procédé présente les étapes de procédé suivantes :
- au mouvement de la bande transporteuse (1) du dispositif de transport dans la direction d'alimentation est superposé un mouvement supplémentaire de la bande transporteuse (1) du dispositif de transport ;
- l'au moins une bande transporteuse (1) du dispositif de transport et l'au moins une bande transporteuse du dispositif de tri d'asperges sont synchronisées l'une à l'autre de telle sorte que dans chaque creux de réception du dispositif de tri d'asperges puisse être déposée exactement une tige d'asperge (3) provenant exactement d'un des creux de réception (5) de l'au moins une bande transporteuse (1) du dispositif de transport ;
**caractérisé en ce que** le mouvement superposé de la bande transporteuse (1) du dispositif de transport est une oscillation dans la direction d'alimentation et dans la direction opposée à la direction d'alimentation.

13. Procédé selon la revendication 12, **caractérisé en ce que** la vitesse d'avance des bandes transporteuses (1) du dispositif de transport est régulée en fonction de la vitesse d'avance dans le dispositif de tri d'asperges, le mouvement superposé étant notamment pris en compte lors de la régulation.
